# EUROPEAN PATENT APPLICATION

(11) **EP 2 315 198 A1**
(43) Date of publication of application: **27.04.2011**
(21) Application number: 10177883.5
(22) Date of filing: 21.09.2010
(51) Int. Cl.: G09G 5/00

(54) **Display apparatus, display apparatus system and resolution control method thereof**

(30) Priority: 23.09.2009 KR 20090090291
(71) Applicant: Samsung Electronics Co., Ltd., Suwon-si, Gyeonggi-do 442-742 (KR)
(72) Inventor: Jang, Sung-chang, Gyeonggi-do (KR)
(74) Representative: Fearnside, Andrew Simon

(57) **Abstract**

Provided are a display apparatus (100), system, method for changing a resolution of an image from the display apparatus rather than from an external apparatus transmitting the image, the display apparatus including: a storage unit (130) which stores therein plural resolution information of the display unit; a communication unit (110) which transmits at least one of the resolution information stored in the storage unit through a network communication; and a controller (120) which controls the display unit to display thereon a received image signal changed corresponding to at least one of the resolution information transmitted by the communication unit.

## Description

### BACKGROUND

### Field

Apparatuses and methods relate to a display apparatus, a display apparatus system and a resolution control method thereof, and more particularly, though not exclusively, to a display apparatus, a display apparatus system and a resolution control method thereof which directly changes a resolution of an image from the display apparatus rather than from an external apparatus transmitting the image.

### Description of the Related Art

Generally, a display apparatus receives a broadcasting signal from an external broadcasting station or a signal from an external apparatus to output an image and an audio signal. Recently, numerous digital display apparatuses which perform a network communication with external apparatuses are being launched. However, even though the display apparatus displays an image received from the external apparatus, a user should control the external apparatus, instead of the display apparatus, to adjust a resolution of the image. This causes inconvenience for a user.

### SUMMARY

Accordingly, it is an aspect of an exemplary embodiment to provide a display apparatus which includes a display unit to display an image signal thereon, the display apparatus including: a storage unit which stores therein plural resolution information of the display unit; a communication unit which transmits at least one of the resolution information stored in the storage unit through a network communication; and a controller which controls the display unit to display thereon a received image signal changed corresponding to at least one of the resolution information transmitted by the communication unit.

The display apparatus may further include a user interface (UI) generator, and the controller may control the UI generator to generate a UI displaying resolution information set in the display unit and available resolution information and display the UI on the display unit.

The display apparatus may further include a user input unit which is provided to select one of the available resolution information from the displayed UI, and the controller may control the display unit to display thereon a received image signal changed corresponding to the selected resolution information.

The controller may store in the storage unit resolution information set before the selection by the user input unit, and control the UI generator to generate a UI checking whether to return to the stored resolution before the selection and display the UI on the display unit.

According to another aspect of an exemplary embodiment, there is provided a resolution control method of a display apparatus, the method including: displaying an image signal received by a communication unit on a display unit; transmitting at least one of plural resolution information stored in the storage unit of the display apparatus by the communication unit through a network communication; and displaying on the display unit a received image signal changed corresponding to at least one of the transmitted resolution information.

The method may further include generating a UI displaying resolution information set in the display unit and available resolution information to display the UI on the display unit.

The method may further include receiving a changed image signal corresponding to selected resolution and displaying the image signal on the display unit if one of the available resolution information is selected from the displayed UI by a user input unit.

The method according may further include storing in the storage unit resolution information set before the selection by the user input unit; and generating a UI checking whether to return to the stored resolution before the selection to be displayed on the display unit.

Another aspect of an exemplary embodiment is to provide a display apparatus system including: a display apparatus which includes a display unit to display thereon an image signal; a storage unit to store therein plural resolution information of the display unit; a communication unit to transmit at least one of resolution information stored in the storage unit through a network communication; and a controller to control the display unit to display thereon a received image signal changed corresponding to at least one of the resolution information transmitted by the communication unit; and an external apparatus which transmits a changed image signal to the display apparatus corresponding to at least one of the resolution information received from the communication unit of the display apparatus.

The display apparatus may further include a UI generator, and the controller may control the UI generator to generate a UI displaying resolution information set in the display unit and available resolution information and display the UI on the display unit.

The display apparatus may further include a user input unit to select one of the available resolution information from the displayed UI, and the controller controls the display unit to display thereon a received image signal changed corresponding to the selected resolution information.

The controller may store in the storage unit resolution information set before the selection by the user input unit, and control the UI generator to generate a UI checking whether to return to the stored resolution before the selection and display the UI on the display unit.

The display apparatus system may include a plurality of display apparatuses.

The external apparatus may include a personal computer (PC), a Digital Versatile Disc (DVD) device, a Blu-Ray disc (BD) device or a web server which transmits an image signal to the display apparatus.

Further according to another aspect of an exemplary embodiment, there is provide a resolution control method of a display apparatus system, the method including: receiving an image signal from an external apparatus by a display apparatus; displaying the received image signal on a display unit of the display apparatus; transmitting at least one of plural resolution information stored in a storage unit of the display apparatus to the external apparatus through a communication unit; and displaying on the display unit a changed image signal received by the display apparatus corresponding to at least one of the transmitted resolution information.

The method may further include generating a UI displaying resolution information set in the display unit and available resolution information to be displayed on the display unit.

The method may further include displaying on the display unit a received image signal changed corresponding to selected resolution information if one of the available resolution information is selected from the displayed UI by a user input unit.

The method may further include storing in the storage unit resolution information set before the selection by the user input unit; and generating a UI checking whether to return to the stored resolution before the selection to be displayed on the display unit.

In another exemplary embodiment, there is a display apparatus including: a display unit which displays an image signal; a storage unit which stores plural resolution information of the display unit; a communication unit which transmits at least one of the plural resolution information stored in the storage unit through a network communication; and a controller which controls the display unit to display a received image signal changed according to the at least one of the resolution information transmitted by the communication unit.

In yet another exemplary embodiment, there is a resolution control method of a display apparatus, the method including: displaying an image signal received by a communication unit, on a display unit; transmitting at least one of plural resolution information stored in the storage unit of the display apparatus by the communication unit through a network communication; and displaying on the display unit a received image signal changed according to the transmitted at least one of plural resolution information.

In another exemplary embodiment, there is a display apparatus system including: a display apparatus including: a display unit which displays an image signal; a storage unit which stores plural resolution information of the display unit; a communication unit which transmits at least one of the plural resolution information stored in the storage unit through a network communication; and a controller which controls the display unit to display a received image signal changed according to the at least one of the plural resolution information transmitted by the communication unit; and an external apparatus which transmits the changed image signal to the display apparatus according to the at least one of the plural resolution information received from the communication unit of the display apparatus.

In yet another exemplary embodiment, there is a resolution control method of a display apparatus system, the method including: receiving an image signal from an external apparatus by a display apparatus; displaying the received image signal on a display unit of the display apparatus; transmitting at least one of plural resolution information stored in a storage unit of the display apparatus to the external apparatus through a communication unit; and displaying on the display unit a changed image signal received by the display apparatus corresponding to the transmitted at least one of the plural resolution information.

### BRIEF DESCRIPTION OF THE DRAWINGS

The above and/or other aspects of an exemplary embodiment will become apparent and more readily appreciated from the following description of the embodiments, taken in conjunction with the accompanying drawings of which:

FIG. 1 is a block diagram of a display apparatus according to an exemplary embodiment;

FIG. 2 is a flowchart of a resolution control method of the display apparatus according to the exemplary embodiment;

FIG. 3 illustrates a user interface (UI) displayed on a display unit according to the exemplary embodiment;

FIG. 4 is a block diagram of a display apparatus system according to an exemplary embodiment;

FIG. 5 is a flowchart of a resolution control method of a display apparatus system according to an exemplary embodiment; and

FIG. 6 is a block diagram of a display apparatus system according to another exemplary embodiment.

### DETAILED DESCRIPTION OF EXEMPLARY EMBODIMENT

Hereinafter, exemplary embodiments will be described with reference to accompanying drawings, wherein like numerals refer to like elements and repetitive descriptions will be avoided as necessary.

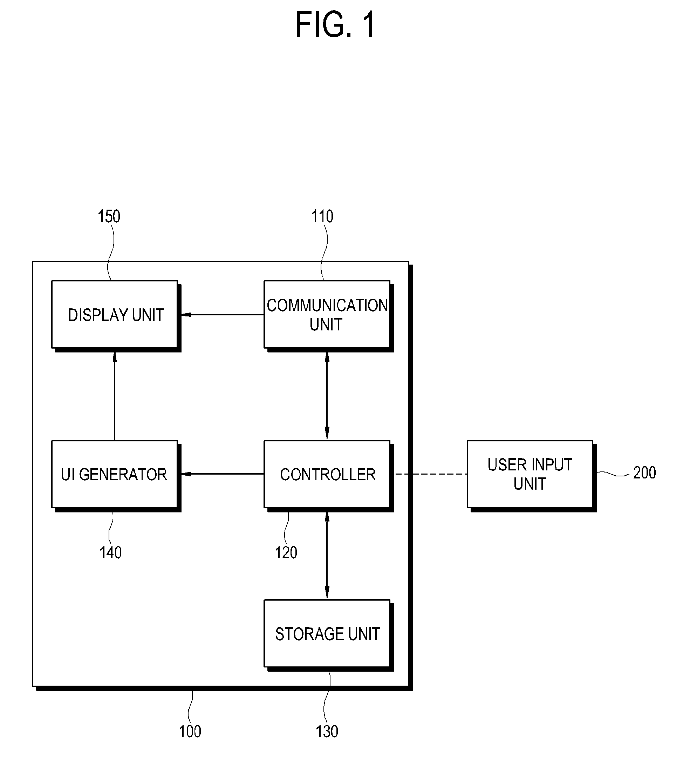

FIG. 1 is a block diagram of a display apparatus according to an exemplary embodiment.

As shown therein, a display apparatus 100 according to the present embodiment includes a communication unit 110, a display unit 150, a storage unit 130, a user interface (UI) generator 140 and a controller 120. The display apparatus 100 may further include an image signal processor (not shown) to process an image signal received through the communication unit 110.

The communication unit 110 may perform a network communication through the Internet or digital living network alliance (DLNA) and receive all of image signals transmitted through the network communication. According to the exemplary embodiment, the communication unit 110 may perform a network communication with an external apparatus. The communication unit 110 may transmit at least one of plural available resolution information of the display apparatus 100 stored in the storage unit 130 (to be described later) through the network communication.

The image signal processor may process an image signal received through the communication unit 110 to be compatible with the display apparatus 100 and further include an audio signal processor (not shown) to process an audio signal additionally. The display apparatus 100 may further include a speaker (not shown) to output the processed audio signal.

The display unit 150 may include various display panels such as liquid crystal display (LCD), light emitting diode (LED) or plasma display panels (PDP) to display thereon an image signal received through the communication unit 110 and processed by the image signal processor.

The storage unit 130 stores therein plural resolution information available from the display unit 150, and stores extended display identification data (EDID) of the display apparatus 100. The EDID defines basic display properties of the display apparatus 100.

The UI generator 140 generates a UI displaying current resolution information set in the display apparatus 100, and plural resolution information available from the display apparatus 100.

The controller 120 may control the display unit 130 to display thereon a received image signal changed corresponding to at least one of the resolution information transmitted through the communication unit 110.

According to the exemplary embodiment, the controller 120 may transmit at least one of the resolution information to an external apparatus performing a network communication with the communication unit 110, and control the display unit 150 to display thereon the received image signal changed corresponding to the transmitted resolution information.

The display apparatus 100 according to the present embodiment may further include a user input unit 200 which is provided to select one of UIs displaying plural available resolution information displayed on the display unit 150. The user input unit 200 may include a button or a touch panel for a touch screen provided in the display apparatus 100, or a remote controller connected to the display apparatus 100 in a wired/wireless manner, a keyboard or other means to select one of the UIs displayed on the display unit 150.

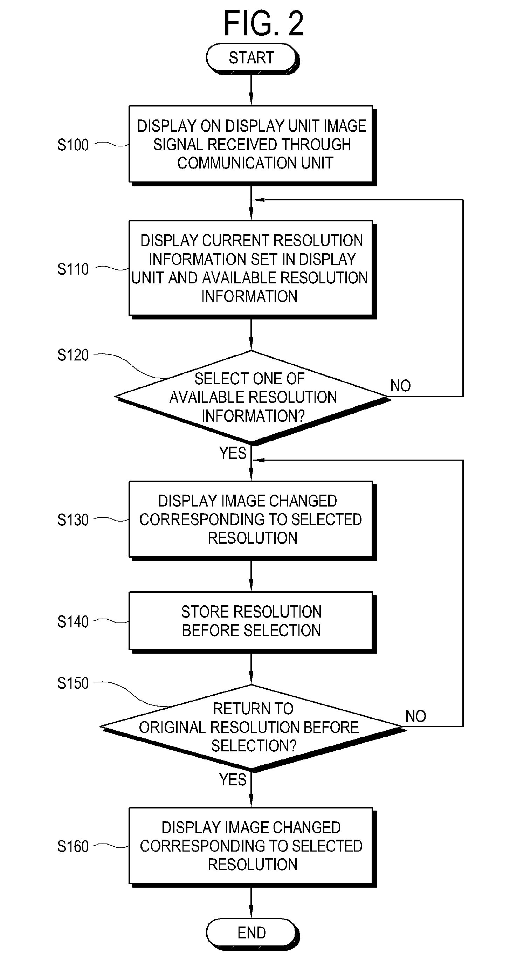

With the foregoing configuration, a resolution control method of the display apparatus 100 according to the exemplary embodiment will be described with reference to FIG. 2.

FIG. 2 is a flowchart of a resolution control method of the display apparatus 100 according to the exemplary embodiment.

As shown therein, the display apparatus 100 displays on the display unit 150 an image signal received through the communication unit 110 (S100).

According to the exemplary embodiment, the communication 110 may exchange EDID information of the display apparatus 100 with the external apparatus transmitting the image signal and receive an image set at an optimum resolution from the external apparatus to display the image on the display unit 150.

However, even if the image at the optimum resolution is displayed on the display unit 150 of the display apparatus 100, the resolution may be undesired by a user as the case may be. In such case, the resolution is changed to a desirable resolution from the external apparatus transmitting the image signal, not from the display apparatus, and the image at the changed resolution is displayed on the display unit 150 of the display apparatus 100. However, a display apparatus which performs a network communication with the external apparatus may be remote from the external apparatus. Then, a user should approach the external apparatus and change the resolution setting, which causes inconvenience. To resolve such inconvenience, the display apparatus 100 according to the present embodiment enables a user to change the resolution of the image from the display apparatus 100 rather than from the external apparatus transmitting the image.

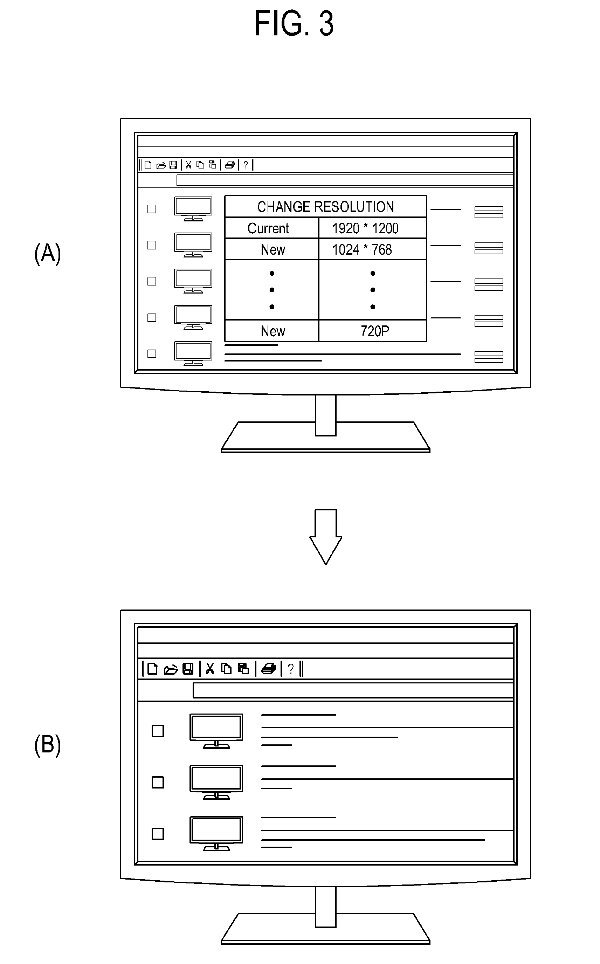

From the foregoing perspective, the controller 120 according to the present embodiment controls the UI generator 140 to generate a UI displaying the current resolution information set in the display unit 150 and resolution information available from the display unit 150, and controls the display unit 150 to display the resolution information thereon (S110). For example, the storage unit 130 stores therein all of the resolution information available from the display unit 150 such as 1366*768, 1024*768, 1920*1200, 720P, 1080I or 1080P. If the resolution set in the display unit 150 is 1920*1200, other remaining plural available resolution information are displayed as UI on the display unit 150 (refer to A in FIG. 3).

If one of the available resolution information is selected by the user input unit 200 from the UI displaying the currently set resolution information and the available resolution information (S120), the controller 120 controls the display unit 150 to display thereon an image signal received from the external apparatus and having a changed resolution corresponding to the selected resolution (S130).

The controller 120 may further control the UI generator 140 to generate a UI checking whether to change into the selected resolution to be displayed on the display unit 150 if one of the plural resolution information is selected by the user input unit 200. If the UI checking whether to change is selected by the user input unit 200, the controller 120 may receive the image changed corresponding to the selected resolution from the external apparatus and display the changed image on the display unit 150.

The controller 120 may store in the storage unit 130 the original resolution information of the display unit 150 set before selection by the user input unit 200 (S140).

The controller 120 controls the UI generator 140 to generate a UI checking whether to return to the resolution information before the selection stored in the storage unit 130 and display the UI on the display unit 150 (S150). If the return to the resolution before the selection is selected by the user input unit 200, the controller 120 may receive a changed image corresponding to the resolution before the selection stored in the storage unit 130 and display the changed image on the display unit 150 (S160).

Accordingly, the display apparatus 100 according to the present embodiment enables a user to change the resolution directly from the display apparatus rather than from the external apparatus transmitting the image, to thereby enhance user's convenience. The display apparatus 100 according to the present embodiment may enhance its effect when it is remote from the external apparatus. Further, the effect may be enhanced when a plurality of display apparatuses is connected to the external apparatus and is remote from one another.

According to another exemplary embodiment, the display apparatus 100 may receive the resolution information available from the external apparatus through the communication unit 110 instead of the plural resolution information stored in the storage unit 130 therein. The controller 120 may control the UI generator 140 to generate a UI displaying resolution information available from the external apparatus received through the communication unit 110 to be displayed on the display unit 150. Then, a user may select the resolution from the UI through the user input unit 200.

FIG. 3 illustrates a UI displayed on the display unit 150 according to the exemplary embodiment.

The controller 120 controls the UI generator 140 to generate the UI displaying the current resolution information set in the display unit 150 and the resolution information available from the display unit 150 to display the UI on the display unit 150 (A in FIG. 3). If 1024*768 is selected by the user input unit 200 among the available resolution information, the controller 120 receives a changed image at a selected resolution of 1024*768 from the external apparatus to display the image on the display unit 150 (B in FIG. 3).

According to the exemplary embodiments, if the display apparatus 100 which performs a network communication with the external apparatus is remote from the external apparatus, a user may directly change the resolution of the image received from the external apparatus, instead of from the external apparatus, in the display apparatus, thereby enhancing user's convenience. Thus, the display apparatus 100 may display the image at a most preferable resolution.

The exemplary embodiments further provide a resolution control method of the display apparatus 100.

More specifically, the resolution control method of the display apparatus 100 includes displaying on the display unit 150 an image signal received through the communication unit 110; transmitting at least one of plural resolution information stored in the storage unit 130 of the display apparatus 100 through the communication unit 110 through the network communication; and displaying on the display unit 150 a received image signal changed corresponding to the at least one of the transmitted resolution information.

The resolution control method of the display apparatus 100 may further include generating a UI displaying the resolution information set in the display unit 150 and the available resolution information to be displayed on the display unit 150.

The resolution control method of the display apparatus 100 may further include displaying on the display unit 150 a received image signal changed corresponding to the selected resolution if one of the available resolution information is selected from the displayed UI by the user input unit 200.

The resolution control method of the display apparatus 100 may further include storing in the storage unit 130 the resolution information set before the selection by the user input unit 200 and generating a UI checking whether to return to the stored original resolution before the selection to be displayed on the display unit 150.

The resolution control method has been described above with reference to FIGS. 2 and 3, and detailed description will be omitted.

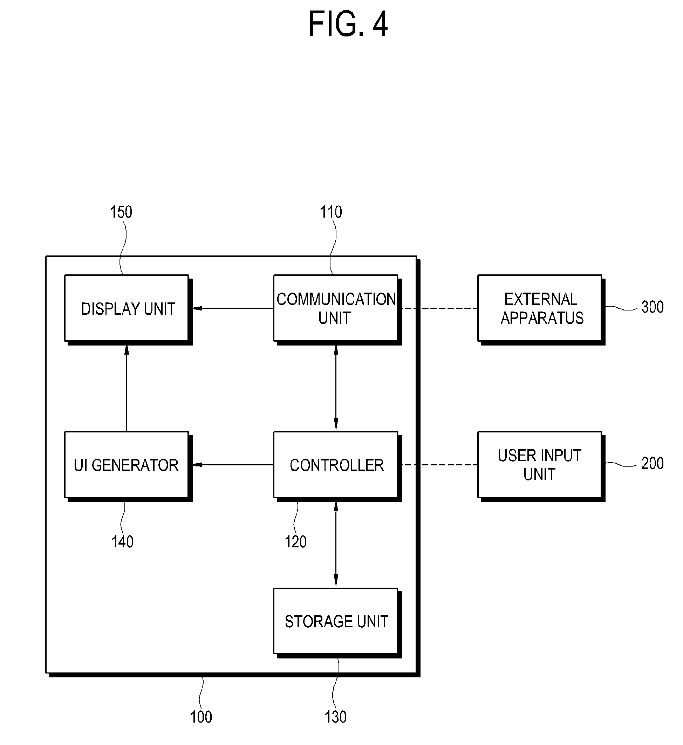

FIG. 4 is a block diagram of a display apparatus system.

According to an exemplary embodiment, the display apparatus system includes the display apparatus 100 which has been described above, and an external apparatus 300 which includes a communication unit (not shown) to perform a network communication with the display apparatus 100.

The external apparatus 300 may perform a network communication with the display apparatus 100. Generally, the external apparatus 300 includes a personal computer (PC), a Digital Versatile Disc (DVD) device, a Blu-ray Disc (BD) dice or a web server which transmits an image signal to the display apparatus 100.

In the display apparatus system, the resolution setup between the display apparatus 100 and the external apparatus 300 is the same as that described above, and the description will not be repeated.

As described above, the display apparatus 100 displays the UI displaying the resolution information and the available resolution information out of the plural resolution information stored in the storage unit 130 thereof, and enables a user to select the resolution through the user input unit 200.

According to another exemplary embodiment, the display apparatus 100 of the display apparatus system may receive available resolution information from the external apparatus 300 through the communication unit 110, instead of the plural resolution information stored in the storage unit 130 of the display apparatus 100. The controller 120 of the display apparatus 100 may control the UI generator 140 to generate a UI displaying resolution information available from the external apparatus which is received through the communication unit 110 and controls the display unit 150 to display the UI thereon. Then, a user may select the resolution from the UI through the user input unit 200.

If the external apparatus 300 includes a general PC which has its own display unit, the resolution information available from the PC may not be the same as that available from the display unit 150 of the display apparatus 100.

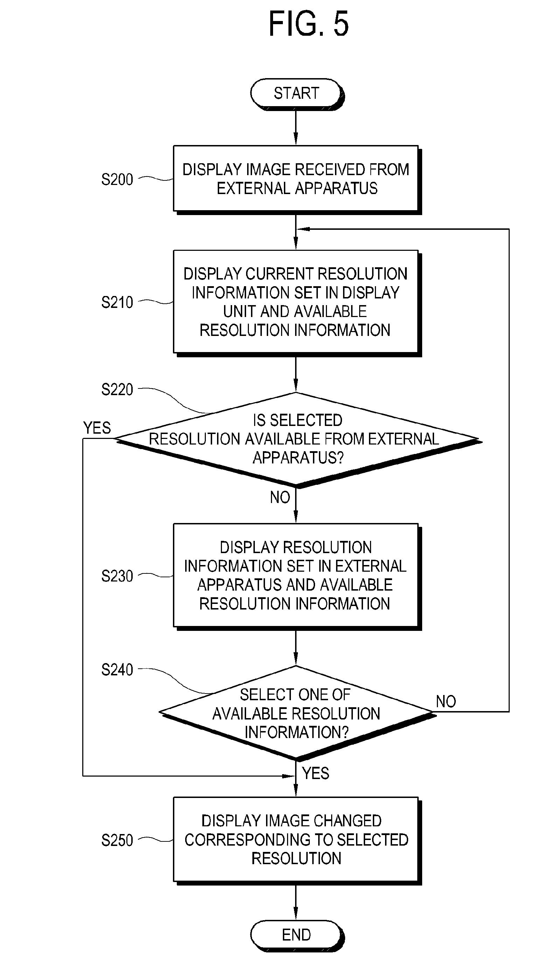

Accordingly, from the UI displaying the resolution information set in the display unit 150 of the display apparatus 100 and the available resolution information, one of the resolution information selected by the user input unit 200 is not available from the external apparatus 300, the controller 120 of the display apparatus 100 may control the UI generator 140 to generate a UI displaying current resolution information set in the external apparatus 300 and the resolution information available from the external apparatus 300 and display the resolution information on the display unit 150. A resolution control method according to the exemplary embodiment is as shown in FIG. 5.

FIG. 5 is a flowchart of a resolution control method of the display apparatus system according to another exemplary embodiment. FIG. 5 illustrates a case where the display apparatus and the external apparatus have different available resolution respectively.

As shown therein, the display apparatus 100 exchanges EDID information with the external apparatus 300 through the communication unit 110, and receives the image set at the optimum resolution from the external apparatus to display the image on the display unit 150 (S200).

The controller 120 of the display apparatus 100 controls the UI generator 140 to generate a UI displaying the current resolution information set in the display unit 150 and the resolution information available from the display unit 150, out of the plural resolution information of the display unit 150 stored in the storage unit 130, and displays the UI on the display unit 150 (S210).

If one of the available resolution is selected by the user input unit 200 from the UI displaying the current resolution information set in the display unit 150 and the available resolution information, the controller 120 requests to the external apparatus 300 to transmit the image with a changed resolution corresponding to the selected resolution. However, the selected resolution may be a resolution which is not available from the external apparatus 300 (S220). Then, the controller 120 controls the UI generator 140 to generate a UI displaying the current resolution information set in the external apparatus 300 and the resolution information available from the external apparatus 300 to display the UI on the display unit 150 (S230).

If one of the available resolution is selected by the user input unit 200 from the UI displaying the current resolution information set in the external apparatus 300 and the resolution information available from the external apparatus 300 (S240), the controller 120 receives the changed image from the external apparatus 300 corresponding to the selected resolution and displays the image on the display unit 150 (S250).

According to the exemplary embodiment, the display apparatus system may include a plurality of display apparatuses.

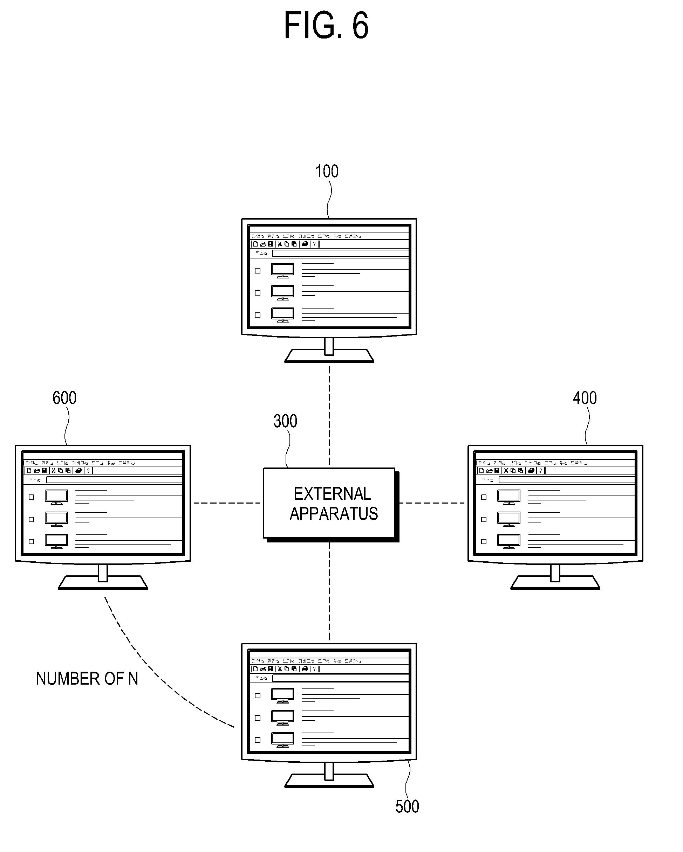

FIG. 6 is a block diagram of a display apparatus system according to an exemplary embodiment.

Referring to FIG. 6, the display apparatus system includes a plurality of display apparatuses 100, 400, 500 and 600, and the external apparatus 300. The external apparatus 300 may individually perform a network communication with the plurality of display apparatuses 100, 400, 500 and 600 while the external apparatus 300 may transmit an image signal to each of the plurality of display apparatuses 100, 400, 500 and 600. Each of the plurality of display apparatuses 100, 400, 500 and 600 may display an image signal received from the external apparatus 300 and change a resolution into a desirable resolution.

The exemplary embodiments provide a resolution control method of the display apparatus system which includes receiving an image signal from the external apparatus 300 by the display apparatus 100; displaying the received image signal on the display unit 150 of the display apparatus 100; transmitting at least one of the plural resolution information stored in the storage unit 130 of the display apparatus 100 to the external apparatus 300 through the communication unit 110; and displaying on the display unit 150 an image signal received by the display apparatus 100 and changed corresponding to the transmitted resolution information.

The control method may further include generating a UI displaying the resolution information set in the display unit 150 and the available resolution information to display the UI on the display unit 150.

The control method may further include displaying on the display unit 150 a received image signal changed corresponding to the selected resolution information if one of the available resolution information is selected by the user input unit 200 from the displayed UI.

The control method may further include storing in the storage unit 130 the original resolution information set before the selection by the user input unit 200, and generating a UI checking whether to return to the resolution before the selection to display the UI on the display unit 150.

The resolution control method of the display apparatus system has been described above with reference to FIGS. 2, 3 and 5, and detailed description will be omitted.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus system comprising:
a display apparatus (100) comprising:
a display unit (150) arranged to display an image signal;
a storage unit (130) arranged to store plural resolution information of the display unit;
a communication unit (110) arranged to transmit at least one of the plural resolution information stored in the storage unit through a network communication; and
a controller (120) arranged to control the display unit to display a received image signal changed according to the at least one of the plural resolution information transmitted by the communication unit; and
an external apparatus (300) arranged to transmit the changed image signal to the display apparatus according to the at least one of the plural resolution information received from the communication unit of the display apparatus.

2. The display apparatus system according to claim 1, wherein the display apparatus further comprises a user interface (UI) generator (140), and the controller is arranged to control the UI generator to generate a first UI displaying resolution information set in the display unit and available resolution information and to display the first UI on the display unit.

3. The display apparatus system according to claim 2, wherein the display apparatus further comprises a user input unit (200) to select one of the available resolution information from the displayed first UI, and the controller is arranged to control the display unit to display a received image signal changed according to the selected one of the available resolution information.

4. The display apparatus system according to claim 3, wherein the controller is arranged to store in the storage unit the resolution information set before the selecting of one of the available resolution by the user input unit, to control the UI generator to generate a second UI to determine whether to return to the stored resolution before the selecting, and to display the second UI on the display unit.

5. The display apparatus system according to any preceding claim, wherein the display apparatus system comprises a plurality of display apparatuses.

6. The display apparatus system according to any preceding claim, wherein the external apparatus comprises a personal computer (PC), a Digital Versatile Disc (DVD) device, a Blu-ray Disc (BD) device or a web server which transmits an image signal to the display apparatus.

7. A resolution control method of a display apparatus system, the method comprising:
receiving (S200) an image signal from an external apparatus by a display apparatus;
displaying (S210) the received image signal on a display unit of the display apparatus;
transmitting at least one of plural resolution information stored in a storage unit of the display apparatus to the external apparatus through a communication unit; and
displaying (S250) on the display unit a changed image signal received by the display apparatus corresponding to the transmitted at least one of the plural resolution information.

8. The method according to claim 7, further comprising generating a user interface (UI) displaying resolution information set in the display unit and available resolution information to be displayed on the display unit.

9. The method according to claim 8, further comprising displaying on the display unit a received image signal changed corresponding to selected resolution information if one of the available resolution information is selected from the displayed UI by a user input unit.

10. The method according to claim 9, further comprising storing in the storage unit resolution information set before the selecting of the resolution information by the user input unit; and
generating a UI to determine whether to return to the stored resolution before the selecting, to be displayed on the display unit.
